# FASCICULE DE BREVET EUROPEEN

(11) **EP 0 378 028 B1**
(45) Date de publication et mention de la délivrance du brevet: **13.01.1993**
(21) Numéro de dépôt: 89403686.2
(22) Date de dépôt: 29.12.1989
(51) Int. Cl.: B60G 3/26, B60G 17/01, B62D 17/00

(54) **Suspension à carrossage variable pour véhicule automobile**
Kraftfahrzeugaufhängung mit veränderlichem Radsturz
Motor vehicle suspension with a variable camber

(30) Priorité: 09.01.1989 FR 8900166
(43) Date de publication de la demande: 18.07.1990
(73) Titulaire: AUTOMOBILES PEUGEOT, 75116 Paris (FR); AUTOMOBILES CITROEN, 92200 Neuilly-sur-Seine (FR)
(72) Inventeur: Langlois, Michel, F-78180 Montigny le Bretonneux (FR); Barthelemy, André, F-78470 Saint Remy les Chevreuse (FR)
(74) Mandataire: Durand, Yves Armand Louis

(56) Documents cités:
- EP-A- 0 001 009
- EP-A- 0 352 178
- US-A- 3 161 419
- US-A- 4 700 972
- US-A- 4 796 720

## Description

La présente invention a essentiellement pour objet une suspension de véhicule automobile à roues indépendantes et munie de moyens pour faire varier le carrossage.

On sait que le carrossage est défini par l'angle que fait la fusée de roue avec l'horizontale, si bien que, lorsque la fusée est orientée vers le haut, c'est-à-dire lorsque la partie supérieure de la roue est rapprochée de la carrosserie, on dit qu'il y a contre-carrossage, tandis que, lorsque la fusée est orientée vers le bas, c'est-à-dire lorsque la partie supérieure de la roue s'éloigne de la carrosserie, on dit qu'il y a carrossage.

Or, dans les suspensions à jambe télescopique associée à un triangle assurant la liaison transversale avec la caisse, ou dans les suspensions à deux triangles articulés à la caisse, le débattement de la roue s'effectue avec un certain pivotement qui engendre un contre-carrossage en attaque, lorsque la roue se rapproche de la carrosserie, et un carrossage en détente, lorsque la roue s'éloigne de la carrosserie.

Un système permettant d'obtenir une variation automatique du carrossage qui soit de nature à réduire l'usure des pneumatiques, à améliorer le comportement routier des véhicules par une meilleure adhérence, ou encore à diminuer les phénomènes de vibrations parasites est connu par US-A-4 700 972 et correspond au préambule de la revendication 1.

La présente invention propose un système selon la revendication 1 qui permet notamment de maintenir, pendant le débattement des roues, un angle de carrossage approximativement constant.

Suivant un mode de réalisation préféré de cette invention, un deuxième vérin dont le corps est articulé à la caisse du véhicule et dont la tige est articulée sur l'élément de liaison transversal précité est hydrauliquement relié au vérin cité en premier lieu de façon que l'attaque d'un vérin engendre la détente de l'autre et réciproquement.

On précisera ici que la tige du deuxième vérin peut être articulée sur un bras inférieur formant triangle de suspension, ou bien sur le bras supérieur formant triangle d'une suspension à deux triangles.

Suivant encore une autre caractéristique préféré selon cette invention, le vérin cité en premier lieu de correction de carrossage est commandé par un circuit hydraulique avec électrovanne pilotée par un calculateur qui reçoit les signaux de différents capteurs détectant l'état de la suspension ainsi que l'accélération transversale.

Dans ce cas, le vérin de correction de carrossage peut être prévu pour agir sur le triangle inférieur ou sur le triangle supérieur d'une suspension à deux triangles.

Mais d'autres avantages et caractéristiques de l'invention apparaîtront mieux dans la description détaillée qui suit et se réfère aux dessins annexés, donnés uniquement à titre d'exemple, et dans lesquels:
- la figure 1 est une vue en élévation, avec coupe partielle d'une suspension conforme aux principes de l'invention;
- la figure 2 est une vue en coupe faite suivant la ligne II-II de la figure 1;
- la figure 3 illustre en élévation et coupe un mode de réalisation de suspension conforme à l'invention et du type MAC PHERSON, comportant un système de correction automatique de l'angle de carrossage;
- la figure 4 illustre un deuxième mode de réalisation de suspension conforme à l'invention mais comportant un système de correction actif de l'angle de carrossage;
- la figure 5 illustre un troisième mode de réalisation de suspension avec, comme dans le cas de la figure 3, un système de correction automatique de l'angle de carrossage;
- la figure 6 illustre un quatrième mode de réalisation de suspension conforme à l'invention et du type à deux triangles, comme dans le cas de la figure 5, mais comportant un système de correction actif de l'angle de carrossage tel que celui représenté sur la figure 4, mais non représenté sur la figure 6; et
- la figure 7 illustre une variante de suspension conforme à l'invention, similaire à celle représentée sur la figure 6, mais dans laquelle le vérin de correction de carrossage est associé au triangle supérieur de la suspension.

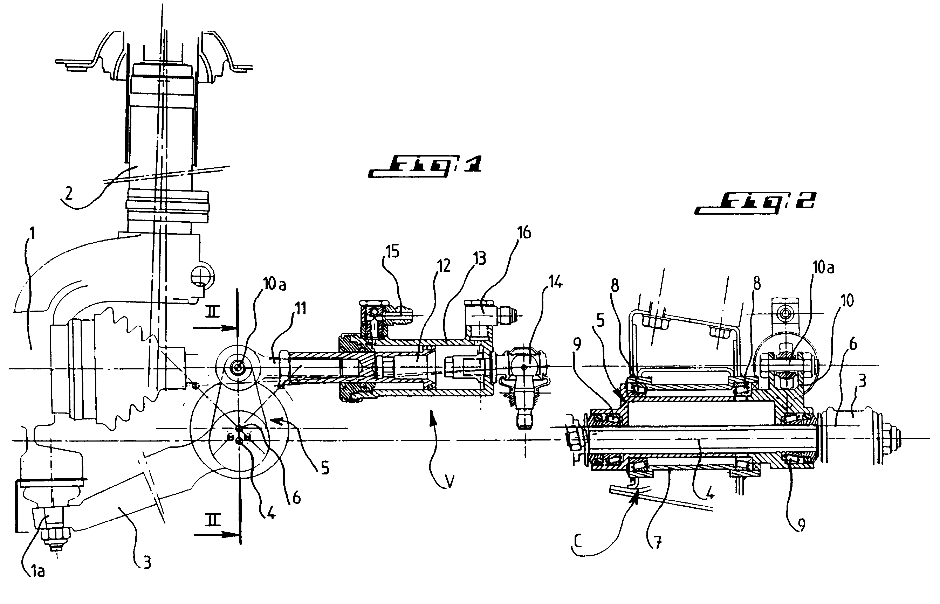

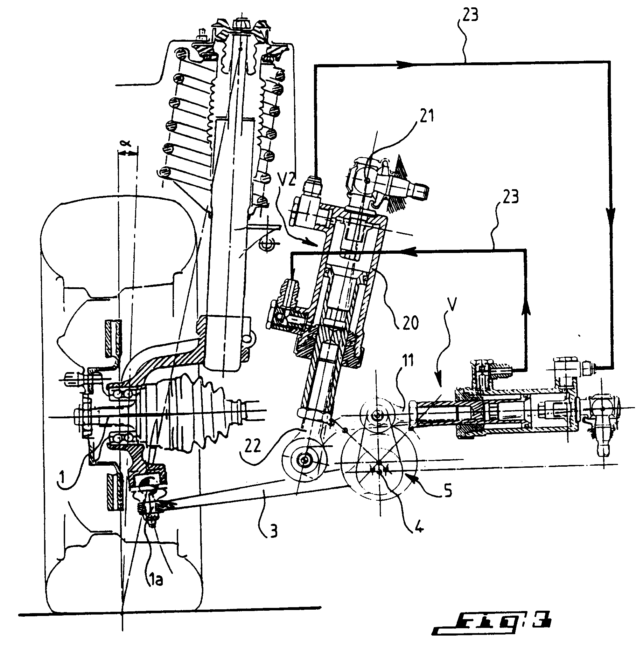

On se reportera tout d'abord aux figures 1 et 2 qui illustrent en détail le mécanisme particulier d'action sur le carrossage conforme à cette invention, ce mécanisme étant associé à une suspension comportant un triangle et une jambe télescopique.

Plus précisément, on a repéré d'une manière générale en 1 le moyeu porte-roue d'un véhicule, surmonté d'une jambe télescopique 2 et à la partie inférieure duquel est accroché un triangle 3 formant un élément de liaison transversal entre le moyeu 1 et la caisse du véhicule.

On voit en 4 sur les figures 1 et 2 l'axe d'articulation du triangle 3, qui tourne à l'intérieur d'un élément excentrique 5. Cet élément s'articule autour d'un axe 6 bien visible sur les figures 1 et 2.

Comme on le voit bien sur la figure 2, un corps 7 soudé sur la carrosserie C et muni de roulements coniques 8 reçoit l'élément excentrique 5 qui est ainsi monté à rotation dans le corps 7.

L'élément excentrique 5 est lui-même pourvu de roulements coniques excentrés 9 dans lesquels est monté tournant ou pivotant l'axe 4 d'articulation du triangle 3 reliant le moyeu de roue 1 à la caisse du véhicule.

L'élément excentrique 5 est, comme on le voit sur la figure 2, muni d'un levier 10 sur lequel est fixé l'extrémité 10a de la tige 11 d'un vérin V de correction de carrossage bien visible sur la figure 1.

La tige 11 du vérin V est commandée par un piston 12 monté coulissant à l'intérieur d'un corps 13, lequel corps est fixé à la caisse du véhicule par l'intermédiaire d'une rotule 14.

Le vérin V est un vérin à double effet et comprend par conséquent une entrée et une sortie repérées respectivement en 15 et 16.

Le fonctionnement du système se déduit de la description qui précède et sera expliqué comme suit.

Le vérin V agit par sa tige 11 qui commade en rotation l'élément excentrique 5 et, comme on le comprend, ce dernier modifie dans l'espace, de par sa fonction, la position de l'axe d'articulation 4 du bras en forme de triangle 3. Dès lors, la position angulaire verticale du moyen porte-roue 1 est modifiée, et il s'ensuit un angle de carrossage nouveau.

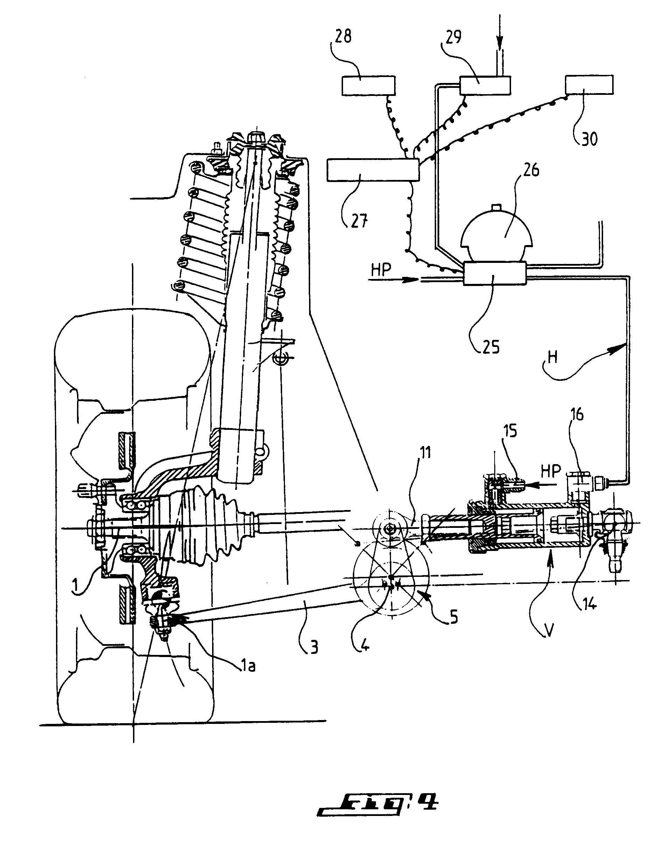

On se reportera maintenant à la figure 3 qui illustre une variante de l'invention avec système de commande et correction automatiques de l'angle de carrossage, applicable à des suspensions à grand débattement.

Cette suspension, qui est du type MAC PHERSON, comprend le vérin V décrit précédemment commandant par sa tige 11 le système à excentrique 5 susceptible de modifier la position de l'axe d'articulation 4 du triangle 3 et donc l'angle α de carrossage. Mais ici, on prévoit un deuxième vérin V2 dont le corps 20 est articulé, par une rotule 21 par exemple à la caisse du véhicule, et dont la tige 22 est articulée sur le bras inférieur ou triangle 3.

Ce deuxième vérin V2 est hydrauliquement relié, comme matérialisé schématiquement par les lignes 23, au vérin V, de façon que l'attaque d'un vérin engendre la détente de l'autre et réciproquement. Autrement dit, en raison de la communication directe entre les deux vérins V et V2, le vérin V2 commande, lorsque la roue monte, le vérin V, et inversement, lorsque la roue descend. C'est dire que pour un débattement donné de la roue, correspond un déplacement donné de la tige 22 du vérin V2 et un déplacement identique de la tige 11 du vérin V.

Le système à deux vérins qui vient d'être décrit est particulièrement adapté aux variations de carrossage en ligne droite, dues aux effets de pompage, de cabrage ou de plongée.

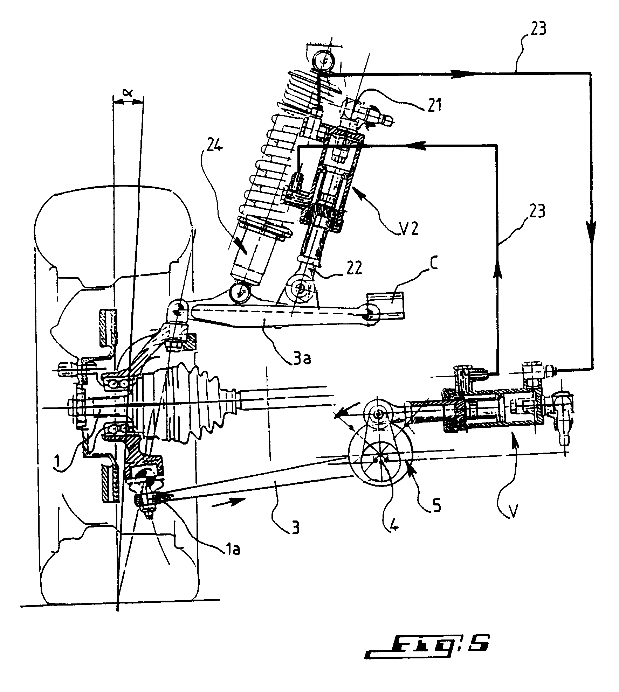

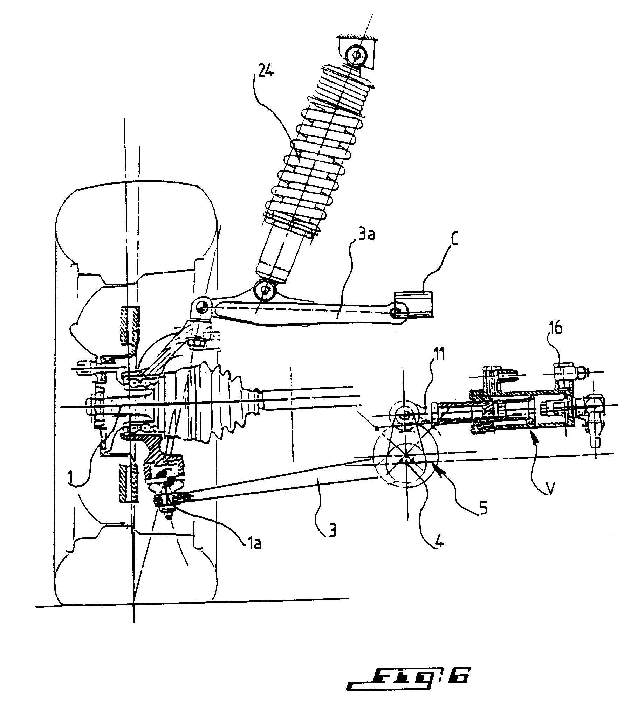

La suspension représentée sur la figure 5 s'apparente à celle de la figure 3, sauf qu'ici, il s'agit d'une suspension à deux triangles, comprenant un triangle inférieur 3, et un triangle supérieur 3a.

On retrouve, sur cette figure, les deux vérins V et V2 hydrauliquement reliés par les conduites 23, le vérin V agissant sur le triangle inférieur 3.

Par contre, le deuxième vérin V2 est articulé par sa tige 22 sur le triangle supérieur 3a sur lequel est aussi articulé, comme connu en soi, un amortisseur 24, étant bien entendu que le triangle supérieur 3 est articulé d'un côté sur le moyeu porte-roue 1 et de l'autre côté sur un élément de carrosserie C.

La suspension visible sur la figure 5 fonctionne comme celle visible sur la figure 3 et permet la correction automatique de l'angle de carrossage α.

On se reportera maintenant à la figure 4 illustrant une suspension dite "active", qui est conforme aux principes de l'invention, et qui est munie d'une source de pression extérieure permettant d'imposer à la roue l'angle de carrossage approprié en toutes circonstances, en ligne droite et en virage, en attaque et en détente.

On retrouve sur la figure 4 le vérin de correction V commandant l'élément excentrique 5 par sa tige 11 pour modifier la position de l'axe d'articulation 4 du triangle ou bras inférieur 3 accroché en 1a au moyeu porte-roue 1.

Ce vérin V est commandé par un circuit hydraulique H comportant une électrovanne 25 à laquelle est associé un régulateur 26.

Cette électrovanne est pilotée par un calculateur 27 qui reçoit les signaux de plusieurs capteurs tels qu'un capteur 28 d'accélération transversale, un détecteur 29 de plongée, cabrage ou roulis accouplé à une barre anti-dévers (non représentée), et un détecteur 30 de carrossage.

Le circuit hydraulique H est raccordé en 16 au vérin V et on comprend que, grâce au calculateur 27 recevant des informations des différents capteurs, on pourra obtenir des variations de carrossage indépendantes les unes des autres.

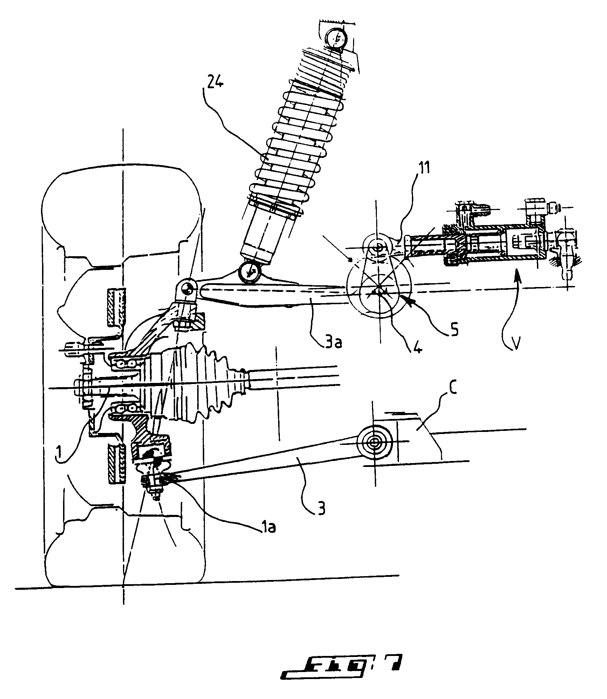

La suspension visible sur la figure 6 s'apparente étroitement à la suspension type MAC PHERSON visible sur la figure 4, en ce sens que la suspension de la figure 6 comporte le circuit hydraulique H visible sur la figure 4 et non représenté sur la figure 6, raccordé au vérin V dont la tige agit sur le triangle inférieur 3 par l'intermédiaire de l'élément excentrique 5.

Il s'agit donc encore ici d'un système de correction actif de l'angle de carrossage, mais la suspension représentée sur la figure 6 n'est plus une suspension du type MAC PHERSON mais une suspension du type à deux triangles, à savoir le triangle inférieur 3 et un triangle supérieur 3a articulé sur la carrosserie C.

Quant à la réalisation de suspension visible sur la figure 7, elle est tout à fait similaire à celle de la figure 6, sauf qu'ici le vérin V n'agit plus sur le triangle inférieur 3, mais sur le triangle supérieur 3a étant entendu que le triangle inférieur 3 est articulé sur la carrosserie C.

Le système de correction selon l'invention présente de nombreux avantages, notamment lorsqu'un véhicule effectue un virage.

Plus précisément, lors d'un virage à droite, on obtiendra une augmentation du contre-carrossage de la roue avant gauche et, simultanément, une augmentation du carrossage de la roue avant droite.

Inversement, dans le cas d'un virage à gauche, on obtiendra simultanément une augmentation du carrossage de la roue avant gauche et une augmentation du contre-carrossage de la roue avant droite.

Comme on le comprend, cette variation de l'angle de carrossage permettra avantageusement d'augmenter la pression au sol du véhicule puisque la perpendicularité des roues par rapport au sol est en quelque sorte conservée. Egalement, on augmente l'adhérence des pneumatiques en virage et on diminue notablement l'usure dissymétrique des pneumatiques ainsi que les effets gyroscopiques nuisibles à la stabilité de la trajectoire.

Bien entendu, l'invention n'est nullement limitée aux modes de réalisation décrits et illustrés qui n'ont été donnés qu'à titre d'exemple.

Ainsi, le système à commande par élément excentrique selon cette invention peut couvrir tous les cas de variations de carrossage que l'on désire, c'est-à-dire soit commander chaque roue ou bien commander les roues deux à deux.

C'est dire que l'invention comprend tous les équivalents techniques des moyens décrits ainsi que leurs combinaisons si celles-ci sont effectuées dans le cadre des revendications.

## Revendications

1. Suspension pour véhicule automobile à roues indépendantes dont le moyeu porte-roue (1) est relié à la caisse du véhicule par au moins un élément de liaison transversal articulé (3), tandis qu'un vérin (V) de correction de carrossage est monté articulé sur la caisse (C) du véhicule et comporte une tige (11) articulée à un levier (10) de commande de correction du carrossage, caractérisée en ce que le levier (10) est solidaire d'un élément excentrique (5) monté à l'intérieur d'un corps (7) solidaire de la carrosserie et propre à tourner autour d'un axe (6) par l'intermédiaire de roulements coniques (8) sur lesquels tourne ledit élément excentrique (5) entraîné par le levier (10), et en ce que l'élément de liaison transversal (3) reliant le moyeu porte-roue (1) à la caisse (C) est monté tournant autour d'un axe (4) situé à l'intérieur de l'élément excentrique (5) par l'intermédiaire de roulements coniques excentrés (9).

2. Suspension selon la revendication 1, caractérisée par un deuxième vérin (V2) dont le corps (20) est articulé (21) à la caisse du véhicule et dont la tige (22) est articulée sur l'élément de liaison transversal précité, ce deuxième vérin étant hydrauliquement relié (23) au vérin (V) précité de façon que l'attaque d'un vérin engendre la détente de l'autre et réciproquement.

3. Suspension selon la revendication 2, caractérisée en ce que la tige (22) du deuxième vérin (V2) précité est articulée sur un bras inférieur formant triangle de suspension (3) ou sur le bras supérieur formant triangle (3a) d'une suspension à deux triangles.

4. Suspension selon la revendication 1, caractérisée en ce que le vérin précité (V) de correction de carrossage est commandé par un circuit hydraulique (H) avec électrovanne (25) pilotée par un calculateur (27) qui reçoit les signaux de différents capteurs (28, 29, 30) détectant l'état de la suspension ainsi que l'accélération transversale, ledit vérin agissant sur le triangle inférieur (3) ou sur le triangle supérieur (3a) d'une suspension à deux triangles.

## Patentansprüche

1. Aufhängung für ein Kraftfahrzeug mit unabhängigen Rädern, dessen radtragende Nabe (1) mit dem Kasten des Fahrzeugs durch wenigstens ein angelenktes Querverbindungselement (3) verbunden ist, während ein Kraftzylinder (V) für die Korrektur des Radsturzes an dem Kasten (C) des Fahrzeugs angelenkt angeordnet ist und eine mit einem Hebel (10) zur Steuerung der Radsturzkorrektur angelenkte Stange (11) aufweist, dadurch gekennzeichnet, dass der Hebel (10) mit einem innerhalb eines mit dem Kasten fest verbundenen Körpers (7) angeordneten und um eine Achse (6) drehbaren exzentrischen Element (5) über Kegelrollenlager (8), auf welchen das besagte durch den Hebel (10) angetriebene exzentrische Element (5) sich dreht, fest verbunden ist und das die radtragende Nabe (1) mit dem Kasten (C) verbindene Querverbindungselement (3) drehbar um eine innerhalb des exzentrischen Elementes (5) liegende Achse (4) über exzentrische Kegelrollenager (9) drehbar angeordnet ist.

2. Aufhängung nach Anspruch 1, gekennzeichnet, durch einen zweiten Kraftzylinder (V2) dessen Körper (20) an dem Kasten des Wagens angelenkt (21) ist und dessen Stange (22) an dem vorgenannten Querverbindungselement angelenkt ist, wobei dieser zweite Kraftzylinder mit dem vorgenannten Kraftzylinder (V) hydraulisch verbunden (23) ist, so dass der Angriff eines Kraftzylinders die Entspannung des anderen und umgekehrt verursacht.

3. Aufhängung nach Anspruch 2, dadurch gekennzeichnet, dass die Stange (22) des vorgenannten zweiten Kraftzylinders (V2) an einem unteren ein Aufhängungsdreieck (3) bildenden Arm oder an dem oberen ein Dreieck (3) einer Aufhängung mit zwei Dreiecken bildenden Arm angelenkt ist.

4. Aufhängung nach Anspruch 1, dadurch gekennzeichnet, dass der vorgenannte Kraftzylinder (V) zur Radsturzkorrektur durch einen hydraulischen Kreislauf (H) mit einem durch einen Rechner (27) gesteuerten Elektroventil (25), welche Signale von verschiedenen den Zustand der Aufhängung sowie die Querbeschleunigung ermittelnden Messgebern (28, 29, 30) empfängt, wobei der Kraftzylinder auf das untere Dreieck (3) oder auf das obere Dreieck (3a) einer Aufhängung mit zwei Dreiecken einwirkt.

## Claims

1. Suspension for an automotive vehicle with independent wheels the wheel-carrying hub (1) of which is connected to the body of the vehicle by at least one pivoted transverse connecting element (3) whereas a wheel camber correcting jack (V) is pivotally mounted on the body (C) of the vehicle and comprises a rod (11) pivotally connected to a lever (10) for the control of the correction of the wheel camber, characterized in that the lever (10) is made fast to an eccentric element (5) mounted inside of a body (7) made fast to the vehicle body and adapted to turn about a shaft (6) through the medium of tapered roller bearings (8) on which is turning the said eccentric element (5) driven by the lever (10) and in that the transverse connecting elememt (3) connecting the wheel-carrying hub (1) to the vehicle body (C) is mounted for turning about a shaft (4) located inside of the eccentric element (5) through the medium of eccentric tapered roller bearings (9).

2. Suspension according to claim 1, characterized by a second jack (V2) the body (20) of which is pivotally connected (21) to the body of the vehicle and the rod (22) of which is pivotally connected to the aforesaid transverse connecting element, this second jack being hydraulically connected (23) to the aforesaid jack (V) so that the attack of one jack generates the expansion of the other one and reversely.

3. Suspension according to claim 2, characterized in that the rod (22) of the second aforesaid jack (V2) is pivotally connected to a lower arm forming a suspension triangle (3) or to the upper arm forming a triangle (3a) of a suspension with two triangles.

4. Susepnsion according to claim 1, characterized in that the aforesaid wheel-camber correcting jack (V) is controlled by a hydraulic circuit (H) with an electro-valve (25) controlled by a computer (27) which receives signals from various sensors (28, 29, 30) detecting the state of the suspension as well as the transverse acceleration, the said jack acting upon the lower triangle (3) or upon the upper triangle (3a) of a suspension with two triangles.
